# EUROPEAN PATENT APPLICATION

(11) **EP 1 811 012 A1**
(43) Date of publication of application: **25.07.2007**
(21) Application number: 05800375.7
(22) Date of filing: 07.11.2005
(51) Int. Cl.: C10M 135/00, C10M 141/08, C10M 141/10, C10M 163/00, C10M 169/00, C10M 169/06, F16C 29/06, F16C 31/06, F16C 33/66

(54) **GREASE COMPOSITION CONFORMING TO VIBRATION AND GUIDE EMPLOYING THE SAME**

(30) Priority: 08.11.2004 JP 2004324354
(71) Applicant: THK CO., LTD., Shinagawa-ku, Tokyo 141-8503 (JP)
(72) Inventor: MICHIOKA, Hidekazu c/o THK Co., Ltd., 11-6,, 1418503 (JP); TAKI, Yoshio c/o Kofu Works, THK Co., Ltd., 754,, 409 3801 (JP); NIWA, Hiroshi c/o THK Co., Ltd., 11-6,, 1418503 (JP)
(74) Representative: Vossius & Partner
(86) International application number: PCT/JP2005/020374
(87) International publication number: WO 2006/049280

(57) **Abstract**

The present invention provides a grease composition conforming to vibration, including a lubricant base oil of a mineral oil base and/or a synthetic oil base, a thickener, and an additive for improving grease performance, in which the additive includes an organomolybdenum, a metal sulfonate, and a metal phenate. The grease composition conforming to vibration exerts excellent abrasion resistance even when it is used in a guide device driven under conditions where vibration is generated. Also provided is a guide device exerting excellent abrasion resistance, including the grease composition conforming to vibration enclosed therein.

## Description

### Technical Field

The present invention relates to a grease composition used for imparting lubricity to guide devices such as a bearing, a sliding part, and a connecting part for various apparatuses. In particular, the present invention relates to a grease composition conforming to vibration, which is suitable for being used in guide devices such as a linear guide device, a curve guide device, a ball screw, and a ball spline, in which a sliding member (sliding table, nut member, or the like) is engaged movably with respect to a shaft (track rail, screw shaft, or the like) via a rolling body (ball or roller) and the shaft and the sliding member are driven under conditions where vibration is generated, and to a guide device employing the grease composition.

### Background Art

The motion of guide devices in which a slide member is engaged movably with respect to a shaft via a rolling body while a load is applied is based on a rolling motion. Therefore, the guide devices have an advantage of low slide resistance, and thus have been used for various applications such as machine tools, conveying equipment, semiconductor equipment, and medical devices.

In the guide devices, it is required to: reduce the slide resistance between a shaft and a sliding member; suppress the abrasion of a rolling body itself, abrasion of rolling surfaces of a track rail where the rolling body rolls, shaft side of a screw shaft or the like, and the like, and abrasion of load rolling surface of a sliding member side of a sliding table, a nut member, or the like; and maintain a highly precise motion between a shaft and a sliding member for a long period of time. Thus, the surface of the rolling body, the rolling surface of the shaft side, and the load rolling surface of the slide member side are required to be provided with appropriate lubricity depending on use conditions thereof. Accordingly, many lubricating methods have conventionally been adopted, and various grease compositions have been proposed as representatives used for achieving the purpose.

For example, JP-A-10-169, 657 proposes a rolling apparatus having improved fretting resistance performance in a swivel motion of a fine stroke, which is used in wire bonding apparatus, a machine tool, or the like, and which has enclosed with a grease composition obtained by adding a grease containing as a thickener 5 to 25 wt% of urea compound, and as a base oil 55 to 94 wt% of at least one member selected from the group consisting of an ester oil, a mineral oil, and a synthetic hydrocarbon oil having a kinematic viscosity at 40°C of 20 to 300 mm2/s with 0.5 to 10 wt% of an organomolybdenum and 0.5 to 10 wt% of calcium sulfonate and/or barium sulfonate.

In addition, JP-A-2002-053,884 describes that a grease composition containing (a) a base oil, (b) a diurea-based thickener having a specific structural formula, (c) at least one metal salt compound selected from the group consisting of a basic metal sulfonate, a basic metal salicylate, and a basic metal phenate, and (d) an alkenyl succinic acid anhydride is excellent in pressure-feedability, and in shear stability and anticorrosive properties when the composition contains water, and thus is preferable for applications of being used in bearings of continuous casting appliances in ironworks, bearings of rollers, and the like.

Further, JP-A-2002-053,889 proposes a grease composition in which a grease composition containing 0.05 to 30 wt% of sodium thiosulfate is blended with 0.1 to 5 wt% of at least one additive selected from the group consisting of calcium salicylate, magnesium salicylate, calcium phenate, and calcium sulfonate. The grease composition is excellent in anticorrosive property and abrasion resistance, and thus is particularly preferably used in bearings, gears, and the like of iron and steel appliances, food manufacturing machines, and the like which are used under conditions where they are brought into contact with large amounts of water.

In addition, JP-A-2003-147,378 proposes a grease composition including: as a base oil a synthetic ester oil; a Li soap-based thickener; and calcium sulfonate, in which the calcium sulfonate contains calcium in a content of 0.2 to 20 wt% and is included in a ratio of 0.5 to 10 parts by weight with respect to 100 parts by weight of the base oil and the thickener in total, whereby acoustic performance and fretting resistance of a roller bearing are improved.

Further, JP-A-2004-518,014 proposes a grease composition obtained by adding a grease composition including a base oil and a thickener with 0.05 to 30 wt% of sodium thiosulfate and 0.1 wt% of at least one additive selected from the group consisting of calcium salicylate, magnesium salicylate, calcium phenate, and calcium sulfonate. The grease composition is excellent in extreme-pressure property, anticorrosive property, and abrasion resistance, and thus is preferably used in bearings and gears which are used in various industrial machinery.

JP-A-2004-043, 781 proposes, though it does not relate to a grease composition, a lubricant oil composition including: an oil-soluble oxymolybdenum complex obtained by reacting an acidic molybdenum compound with a specific basic nitrogen compound under the presence of a polarity accelerator (polar promotor); and a specific molybdenum dithiocarbamate. The lubricant oil composition has improved abrasion reduction performance, and thus is useful as engine oils or the like to be used in automobile production and the like.

In recent years, in fields of machine tools such as machining centers, NC lathes, and drill centers, mounting apparatuses such as chip mounters and bonders, and the like, demands for improvement in production efficiency, processing/mounting at high tact, and the like have been additionally increasing. For example, ball screws, linear motors, and the like having large leads have been used for a reciprocal motion, and conditions of a speed of 90 m/min or more and an acceleration speed of 1 G or more or, sometimes, a speed of 200 m/min or more and an acceleration speed of 4 G or more are demanded instead of the conventional conditions of a speed of up to about 60 m/min and an acceleration speed of up to about 1 G.

The guide devices may be used under conditions of high speeds and high acceleration speeds that the guide devices have never experienced. For example, a guide device for a withdrawal robot used in a field of an injection molding apparatus and the like (for example, LM guide device) is used at a high speed and a high acceleration speed such as a maximum speed of 480 m/min and a maximum acceleration speed of 10 G. In addition, in a conveying apparatus driven by a linear motor/belt which is used in a field of production equipment or the like, the guide device is used at a high speed and a high acceleration speed such as a maximum speed to 240 to 300 m/min and a maximum acceleration speed of 6 G.

According to the investigation of the inventors of the present invention, when a guide device is used under such conditions of high speeds (120 m/min or more) and high acceleration speeds (2 G or more), there arise new types of problems in abrasion which have never been observed.

That is, in a guide device in which a sliding member is moved relatively to a shaft via a rolling body, when fine slip repetitively occurs, for example, between the two surfaces being brought into contact with each other (between a rolling surface of the shaft and the rolling body, and between a rolling surface of the sliding member and the rolling body) during transfer, the absence of an oil membrane occurs between the two surfaces being brought into contact with each other, that is, a surface of a rolling body, or a rolling surface of the shaft or the sliding member (hereinafter, sometimes referred to as "lubricant surface") which require to have lubricant performance. Accordingly, the lubricant surfaces have insufficient lubricity and abnormal abrasion is generated, or, in other words, a quasi-fretting phenomenon is observed.

In a conventional fretting phenomenon, it is thought that the absence of the oil membrane occurs on a lubricant surface when the relative movement between a shaft and a sliding member is absent, or if present, the movement is extremely slow, whereby abrasion and corrosion are generated. Heretofore, it has been thought that when a sliding member is moved relatively to a shaft via a rolling body, a lubricant surface thereof is supplied with a lubricant agent such as a lubricant oil or a grease from surrounding environment to form an oil membrane on the lubricant surface. Thus, it has been thought that the oil membrane is never absent and abrasion due to the fretting phenomenon does not occur.

The inventors of the present invention have investigated in detail on abrasion generated when a linear guide device is subjected to a reciprocal motion under conditions of a high speed and a high acceleration speed of 90 m/min or more and 1 G or more. As a result, surprisingly, abrasion which had not been observed under the conventional conditions (speed of 60 m/min or less and acceleration speed of 1 G or less) and which was similar to that shown in the fretting phenomenon was observed not only in a stroke end, but in acceleration/deceleration regions and constant region.

In addition, the inventors of the present invention have investigated in further detail on the abrasion under the conditions of the high speed and the high acceleration speed. As a result, it was found that fine vibration was generated in a stroke end or acceleration/deceleration regions in the reciprocate motion, in particular, in a stroke end, and the fine vibration has amplitudes of 5 to 20 µm under the conditions of a high speed and an acceleration speed of 90 m/min or more and 1 G or more, which was larger than the amplitudes obtained under the conventional conditions (speed of 60 m/min or less and acceleration speed of 1 G or less), that was, about 5 µm. The strong fine vibration causes the abrasion similar to that shown in the fretting phenomenon to be generated in the stroke end, and gradually spreads from the acceleration/deceleration regions to the constant region. In addition, it was found that abrasion powder generated by the abrasion in the stroke end was dispersed from the acceleration/deceleration regions to the constant region to promote the abrasion in the acceleration/deceleration region and the constant region.

Further, it was confirmed that when vibration having amplitudes of 10 µm or more is generated, even under the conventional conditions (speed of 60 m/min or less and acceleration speed of 1 G or less), the abrasion powder generated by abrasion in the stroke end disperses from the acceleration/deceleration regions to the constant region to promote abrasion in the acceleration/deceleration regions and the constant region.

Patent Document 1: JP-A-10-169,657
Patent Document 2: JP-A-2002-053,884
Patent Document 3: JP-A-2002-053,889
Patent Document 4: JP-A-2003-147,378
Patent Document 5: JP-A-2004-518,014
Patent Document 6: JP-A-2004-043,781

### Disclosure of the Invention

### Problem to be solved by the Invention

The inventors of the present invention have made extensive investigations on a grease composition conforming to vibration which can positively exert excellent abrasion resistance even when the grease composition is used in a guide device which is driven under conditions where vibration having large amplitudes is inevitably generated. As a result, the inventors of the present invention have surprisingly found that the object can be achieved by simultaneously using, as an additive for improving grease performance, three components of an organomolybdenum, a metal sulfonate, and a metal phenate in combination, and thus have completed the present invention.

Accordingly, it is an object of the present invention to provide a grease composition conforming to vibration, which exerts excellent abrasion resistance even when the grease composition is used in a guide device which is driven under conditions where vibration is generated.
In addition, it is another object of the present invention to provide a guide device which exerts excellent abrasion resistance, in which the grease composition conforming to vibration is enclosed.

### Means for solving the Problems

That is, according to the present invention, there is provided a grease composition conforming to vibration, including: a lubricant base oil of a mineral oil base and/or a synthetic oil base; a thickener; and an additive for improving grease performance, in which the additive includes an organomolybdenum, a metal sulfonate, and a metal phenate.
In addition, according to the present invention, there is provided a guide device in which the grease composition for conforming to vibration is enclosed.

In the present invention, the lubricant oil to be used may be of mineral oil-based or synthetic oil-based. The lubricant oil preferably has a kinematic viscosity (JIS K2220.23; 40°C) of 5 mm²/s or more and 25 mm²/s or less, and preferably 9 mm²/s or more and 21 mm²/s or less. A kinematic viscosity (JIS K2220.23; 40°C) of less than 5 mm²/s may result in a problem of reduction in lubricating performance while a kinematic viscosity (JIS K2220.23; 40°C) of more than 25 mm²/s may result in a problem of reduction in fretting property.

A specific example of the lubricant base oil satisfying the conditions is a mineral oil-based lubricant base oil which is obtained by, for example, methods generally used in a process of producing a lubricant oil in petroleum refining industry. For example, there is a lubricant oil obtained in a manner such that: crude petroleum is distilled under normal pressure or reduced pressure to obtain a lubricant oil fraction; and the lubricant oil fraction is purified by subjecting it to at least one treatment selected from the group consisting of solvent deresining, solvent extraction, hydrocracking, solvent dewaxing, hydrogenation refining, sulfuric acid washing, clay treatment, and the like.

In addition, examples of the synthetic lubricant base oil include: synthetic hydrocarbon oils of poly α-olefins such as polybutene, a 1-octene oligomer, and a 1-decene oligomer, or hydrides thereof; ester-based synthetic oils of diesters such as ditridecyl glutarate, di-2-ethylhexyl adipate, diisodecyl adipate, ditridecyl adipate, and di-3-ethylhexyl sebacate, polyol esters such as trimethylolpropane caprylate, trimethylolpropane pelargonate, pentaerythritol-2-ethylhexanoate, and pentaerythritol pelargonate, and the like; polyglycol-based synthetic oils such as polyoxyalkylene glycol; phenyl ether synthetic oils such as polyphenyl ether and dialkyldiphenyl ether; silicone-based synthetic oils such as silicone oil; aromatic synthetic oils such as alkylnaphthalene and alkylbenzene; fluorine-based synthetic oils; and oil mixtures including the oils. Any one of the mineral oil-based and synthetic lubricant base oils can be used alone, or two or more of them can be used as a mixture.

In addition, for the thickener constituting the grease composition conforming to vibration of the present invention, thickeners generally conventionally used in greases for guide devices, other bearings, and the like can be used. Examples of the thickener include: thickeners based on metal soap such as beef tallow-based calcium soap, castor oil-based calcium soap, aluminum soap, sodium soap, beef tallow-based lithium soap, and castor oil-based lithium soap; complexed soap-based thickeners of a calcium complex, an aluminum complex, a lithium complex, and the like; urea-based thickeners of an aromatic diurea, an aliphatic diurea, an alicyclic diurea, triurea, polyurea, and the like; organic thickeners such as sodium terephthalamate and PTFE; and inorganic thickeners such as organized bentonite and silica gel. The aliphatic diurea-based thickeners are preferable. Any one of the thickeners can be used alone, or two or more of them can be used as a mixture.

In the present invention, three ingredients, that is, an organomolybdenum, a metal sulfonate, and a metal phenate are used in combination as an additive for improving grease performance.
In this case, examples of the organomolybdenum include molybdenum dithiocarbamate, molybdenum dithiophosphate, and molybdenum dithiocarbamate. Any one of the organomolybdenums can be used alone, or two or more of them can be used in combination. The organomolybdenums exert an action as a metal contact inhibitor.

In addition, examples of the metal sulfonate to be used as an additive in the present invention include: metal sulfonates such as zinc sulfonate and sodium sulfonate; and alkali earth metal sulfonates such as calcium sulfonate and barium sulfonate. Zinc sulfonate and alkali earth metal sulfonates are preferable, and zinc sulfonate, calcium sulfonate, and barium sulfonate are more preferable. Any one of the metal sulfonates can be used alone, or two or more of them can be used in combination. The metal sulfonates exert an action as rolling lifetime improver.

A particularly preferable aspect of use of the metal sulfonates is as follows: zinc sulfonate and calcium sulfonate are used in combination in a weight ratio of 1:3 to 3:1, or preferably 1:2 to 2:1. The combination of zinc sulfonate and calcium sulfonate provides an advantage in that the lifetime improving effect and the abrasion reducing effect are additionally improved.

Further, the metal phenate to be used as an additive in the present invention includes an alkali earth metal salt of an alkyl phenol having a linear or branched alkyl group having 8 or more, preferably 9 to 22 carbon atoms, an alkyl phenol sulfide, and an alkyl phenol-aldehyde condensed product. Examples of the metal phenate include metal phenates generally induced from an alkyl phenol, sulfonated phenates induced from a sulfonated alkyl phenol, and methylene-binding phenate induced from an alkyl phenol-aldehyde condensed product.

Specific examples of the metal phenate preferably include calcium phenate, barium phenate, and magnesium phenate, with calcium phenate being more preferable. Any one of the metal phenates can be used alone, or two or more of them can be used in combination. The metal phenates exert an action of improving performance of a solid lubricant.

In the grease composition conforming to vibration of the present invention, addition amounts of the thickener, the organomolybdenum, the metal sulfonate, and the metal phenate are as follows: the addition amount of the thickener is 5 wt% or more and 20 wt% or less, and preferably 6 wt% or more and 12 wt% or less; the addition amount of the organomolybdenum is 2 wt% or more and 8 wt% or less, and preferably 4 wt% or more and 6 wt% or less; the addition amount of the metal sulfonate is 1 wt% or more and 7 wt% or less, and preferably 3 wt% or more and 5 wt% or less; and the addition amount of the metal phenate is 0.2 wt% or more and 3 wt% or less, and preferably 0.5 wt% or more and 1.5 wt% or less.

An addition amount of the thickener of less than 5 wt% results in a problem of leak of oil due to softening while an addition amount of more than 20 wt% results in a problem of an increase in resistance due to hardening. An addition amount of the organomolybdenum of less than 2 wt% results in a problem of abrasion due to metal contact while an addition amount of more than 8 wt% results in a problem of an increase in stirring resistance. In addition, an addition amount of the metal sulfonate of less than 1 wt% results in a problem of reduction in rolling lifetime while an addition amount of less than 7 wt% results in excessive cost since the effect of the metal sulfonate is saturated. Further, an addition amount of the metal phenate of less than 0.2 wt% results in a problem of reduction in abrasion reducing effect while an addition amount of less than 3 wt% results in excessive cost since the effect of the metal phenate is saturated.

The grease composition conforming to vibration of the present invention, which includes the lubricant base oil, thickener, and additive composed of the three ingredients preferably has a worked penetration (JIS K2220.7; 25°C) of 250 in a case where the grease composition is enclosed in a guide device, for example, and more preferably 310 to 350 from the viewpoint of pressure-feedability, though the worked penetration may vary depending on the purpose and target of use. When the worked penetration (JIS K2220.7; 25°C) is less than 250 in a case where the grease composition of the present invention is used in a guide device, it may result in a problem in that the stirring resistance increases. Meanwhile, when the worked penetration is more than 385, the grease composition of the present invention may be dispersed by a high-speed motion, resulting in insufficient lubricity.

The grease composition conforming to vibration of the present invention may be added with various third components which are conventionally blended to this kind of greases, within a desired range as required, for example, worked penetration adjusters such as fatty acid/glycerol, antioxidants such as amino acid compound/phenol, anticorrosive agents such as succinic acid anhydride, extreme-pressure additives such as phosphate, oiliness improvers such as fatty acid/ester, and metal deactivators such as abrasion reducing agents such as phosphate.

The grease composition conforming to vibration of the present invention is preferably used, but not limited to, for imparting lubricity to guide devices such as a bearing part, a sliding part, and a connecting part for various apparatuses. Specifically, the grease composition conforming to vibration of the present invention is preferably used in guide devices such as a linear guide device, a curve guide device, a ball screw, and a ball spline, which have: a shaft (track rail, screw shaft, or the like) having a rolling surface for a rolling body (ball or roller) ; a sliding member (sliding table, nut member, or the like) which has a rolling surface for a rolling body corresponding to the rolling surface, is engaged with the shaft via the rolling body, and moves relatively to the shaft; and a rolling body interposed between the shaft and the sliding member, in which the sliding member is moved relatively to the shaft under conditions where vibration is generated.

The grease composition conforming to vibration is used by being enclosed in a lubricant region which is formed between the shaft and the sliding member of the guide device and in which the rolling body is present. The method of and means for enclosing the grease composition in the guide device are not particularly limited. When the grease composition has a worked penetration of 250 or more, no problem such as clogging of an oil supply passage occurs.

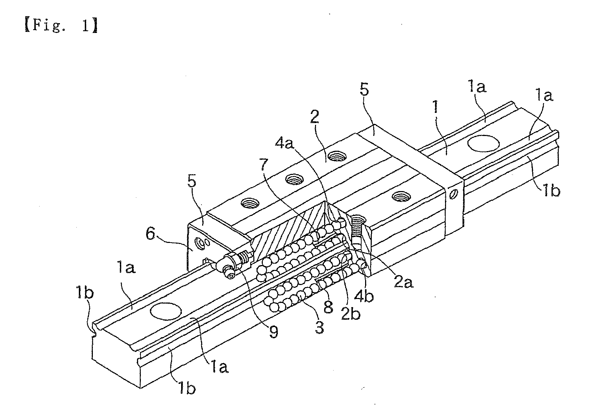

The method and means used for, for example, a linear guide device are described hereinbelow by taking a linear slide ball bearing as an example.
That is, as shown in FIG. 1, a linear slide ball bearing (linear guide device) B is composed of a track rail (tack shaft) 1, a sliding table (sliding member) 2 which slides along with the track rail 1, and a ball 3 that rolls between the track rail 1 and the sliding table 2 while load is applied. The track rail 1 has a pair of rolling grooves (lubricant surfaces) 1a and 1b on right and left shoulders of the track rail. The sliding table 2 has: a pair of right and left load rolling grooves (lubricant surfaces) 2a and 2b, on the right and left edges of the sliding table, which form load ball rolling passages for the ball 3 together with the rolling grooves 1a and 1b of the track rail 1; and non-loading ball rolling holes 4a and 4b which form non-load ball rolling passages for the ball 3. Further, the sliding table 2 is provided on anterior and posterior edges thereof with end plates 5 each having a ball direction converting passage (not shown) for forming an endless track for the ball 3, the ball direction converting passage communicating and connecting the load ball rolling passage and the non-load ball rolling passage.

Outsides of the end plates 5 are each provided with an end seal 6 having an edge which is abutted to and slides on the track rail 1. In addition, the sliding table 2 has: an inner seal 7 having an edge abutted to the upper surface of the track rail 1; and a side seal 8 having an edge abutted to the side surface of the track rail 1. The end seal 6, inner seal 7, and the side seal 8 form closed spaces for enclosing a grease between the right and left shoulders of the track rail 1 and the corresponding right and left edges of the sliding table 2. Further, one of the end plates 5 is provided with a grease nipple 9 for dispensing a grease from the ball direction converting passage formed in the end plate 5 so that the closed spaces are filled with the grease.

The inclusion of the grease composition conforming to vibration in the linear slide ball bearing B is conducted in such a manner that, for example: a grease gun is charged with the grease; and the grease is sent from the grease nipple 9 of the linear slide ball bearing B so that the closed spaces formed between the right and left shoulders of the track rail 1 and the right and left edges of the sliding table 2 were filled with the grease.

### Effects of the Invention

The grease composition conforming vibration of the present invention exerts an excellent abrasion resistance even when the grease composition is used under conditions of driving where vibration is generated. The grease composition is particularly preferably used for various guide devices such as a linear guide device, a curve guide device, a ball screw, and a ball spline, which are used under conditions where vibration is generated when a sliding member (sliding table, nut member, or the like) is moved relatively to a shaft (track rail, screw shaft, or the like) via a ball or a roller (rolling body).

In addition, in the guide device of the present invention, the grease composition conforming to vibration is enclosed in a lubricant region of the guide device. Therefore, even when the guide device is used under conditions where vibration is generated (high speed of 90 m/min or more, and 1 G or more), generation of abnormal abrasion can be suppressed as much as possible and sliding stability can thus be maintained for a long period of time.

### Brief Description of the drawings

FIG. 1 is a perspective explanatory view of a partially cutout linear slide ball bearing (linear guide device) in which a grease composition conforming to vibration of the present invention is used.

FIG. 2 shows front and side explanatory views of a testing apparatus used in an abrasion evaluation test.

FIG. 3 is a partially enlarged explanatory view showing a test sample which is set in the testing apparatus shown in FIG. 2.

FIG. 4 is a graph showing a relationship between a traveling speed and vibration under test conditions such that a test sample M set in the testing apparatus shown in FIG. 2 is used.

FIG. 5 is a graph showing an abrasion status (length in mm and depth in µm) regarding the test sample M in which the grease composition according to Example 1 of the present invention is enclosed.

FIG. 6 is a graph showing an abrasion status (length in mm and depth in µm) regarding the test sample M in which the grease composition according to Comparative Example 1 of the present invention is enclosed.

FIG. 7 is a graph showing an abrasion status (length in mm and depth in µm) regarding the test sample M in which the grease composition according to Comparative Example 2 of the present invention is enclosed.

### Description of Numerals

B: linear slide ball bearing (linear guide device), M: test sample, 1: track rail (track shaft), 1a, 1b: rolling groove (lubricant surface), 2: sliding table (sliding member), 2a,2b: load rolling groove (lubricant surface), 3: ball, 4a,4b: non-load ball rolling hole, 5: end plate, 6: end seal, 7: inner seal, 8: side seal, 9: grease nipple, 10: plate, 11: load cell, 12: disk spring, 13: loading shaft, 14: acceleration vibration sensor.

### Best Mode for carrying out the Invention

Hereinafter, preferable embodiments of the present invention will be described in detail on the basis of examples and comparative examples.
Note that, in the following examples and comparative examples, grease compositions prepared in the respective examples and comparative examples were each loaded into a linear slide ball bearing (hereinafter, simply referred to as "linear guide device") to form atestsampleM. The following abrasion evaluation test was conducted by using the test sample M mounted on a testing apparatus to evaluate performance of the respective grease compositions.

### (Abrasion evaluation test)

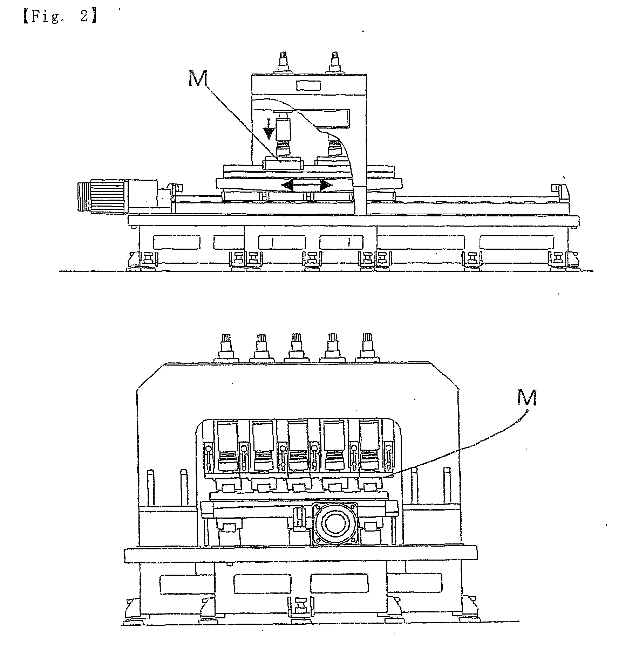

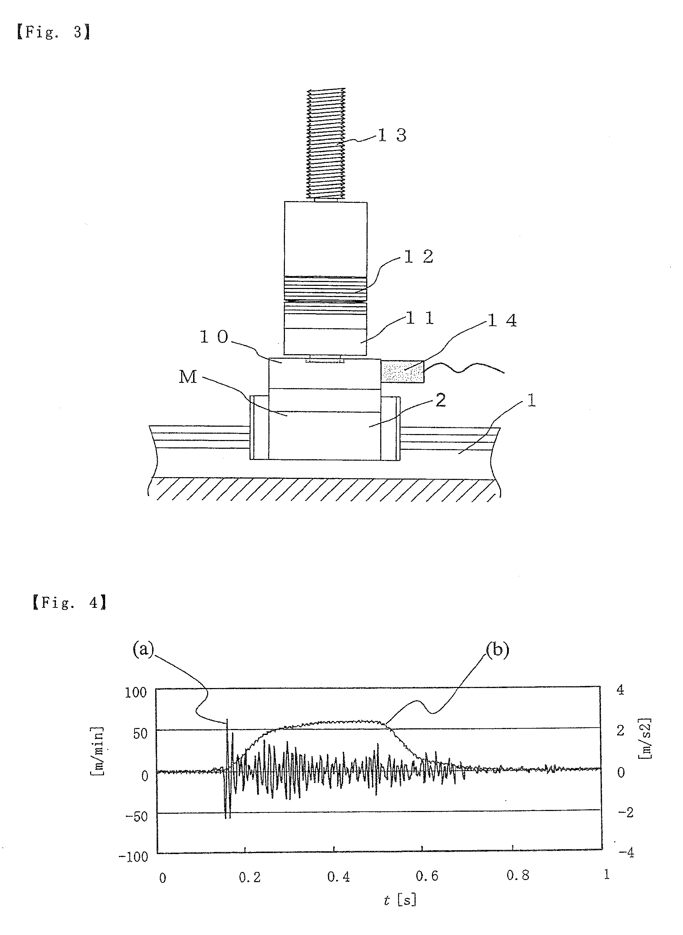

As shown in FIGS. 2 and 3, an apparatus for testing load resistance of a linear guide device (manufactured by DaitoSeiki Co., Ltd.) as shown in FIG. 2 was incorporated with test samples M composed of a group of linear guide devices (SHS25R1UU+580LP, trade name, manufactured by THK) in which a grease composition (only initial lipid supply) is enclosed in an inclusion amount of 2.5 cm³ per one linear guide device. A plate 10, a load cell 11, a disk spring 12, and a loading shaft 13 were arranged on each of the test sample M, and the plate 10 was provided with an acceleration vibration sensor 14, thereby constituting a testing apparatus.

The testing apparatus thus prepared was used for applying a load of 11.05 kN to the test sample M from the loading shaft 14 via the loading shaft 13. The test sample M was allowed to run under driving conditions of a maximum speed of 60 m/s, a stroke of 350 mm, and an acceleration speed of 9.8 m/s² so that vibration of 94 Hz was generated, whereby abrasion of a rolling surface of a rolling body during stroke on the track rail 1 constituting the test sample M was evaluated.

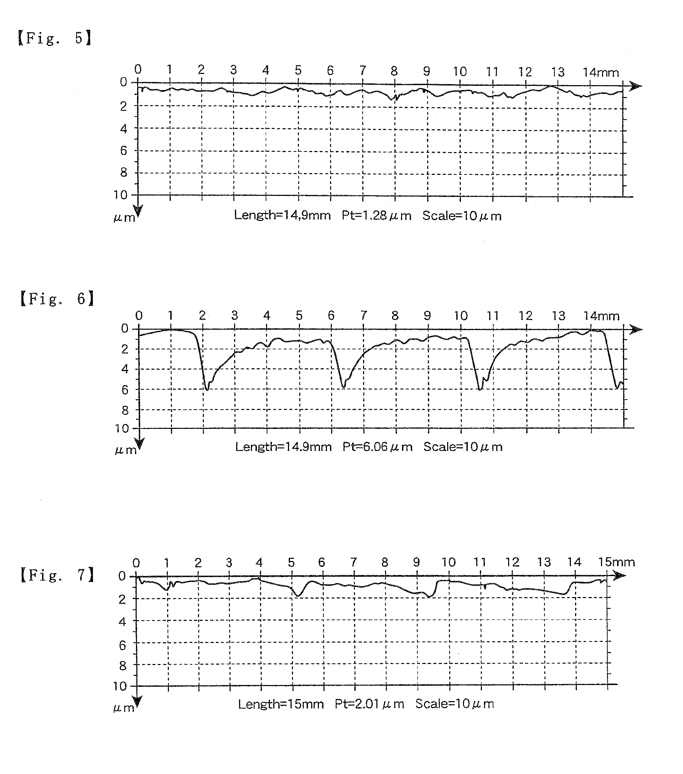

At that time, relative traveling speed and vibration between the track rail 1 and the sliding table 2 constituting the test sample M were simultaneously measured to investigate the relationship between the traveling speed (b) and the vibration (a) regarding the test sample M. The results thereof were as shown in FIG. 4 which only shows data of an approach route of a reciprocating motion. The data of a returning route was symmetrical to the data of the approach route. The left axis of FIG. 4 indicates the traveling speed (b) with the maximum traveling speed of 60 m/min, and the right axis of FIG. 4 indicates the vibration (a) with the results that vibration was observed in an acceleration region, a constant region, and a deceleration region.

### (Example 1 and Comparative Example 1)

Lubricant base oils having kinematic viscosities (JIS K2220.23; 40°C) as shown in Table 1 were added and reacted with a mixture of diphenylmethane-4,4'-diisocyanate and octylamine and stearylamine, respectively, in a molar ratio of 1:1 to prepare base greases containing an aliphatic urea (thickener) in ratios shown in Table 1. The base greases were each added with an organomolybdenum (organomolybdenum B, Sakuralube 600, trade name, manufactured by Adeka Corporation), metal sulfonates (zinc sulfonate (NA-SUL ZS, trade name, manufactured by KING INDUSTRIES) and calcium sulfonate), and calcium phenate in ratios as shown in Table 1, and the whole was uniformly mixed, whereby grease compositions of Example 1 and Comparative Example 1 having worked penetrations (JIS K2220.7; 25°C) and dropping points (JIS K2220.8) as shown in Table 1 were prepared.

### (Comparative Example 2)

For a grease composition of Comparative Example 2, there was used a commercially-available grease (AFC, trade name, manufactured by THK) which: contained an ester-based synthetic oil having a kinematic viscosity (JIS K2220.23; 40°C) of 28, 15 wt% of a diurea-based thickener, and 10 wt% of a mixture of an antioxidant, a anticorrosive agent, an anti-abrasion agent, and a metal deactivator; and had a worked penetration (JIS K2220.7; 25°C), extreme-pressure properties in a four-ball method (ASTM D 2596), a dropping point (JIS K2220.8), and a usable temperature range as shown in Table 1.

The grease compositions of Example 1 and Comparative Examples 1 and 2 were subjected to the abrasion evaluation test under the same conditions to investigate running distances (km) and abrasion statuses of rolling surfaces.
The results are shown in Table 1. The abrasion statuses (length in mm and depth in µm) measured in the abrasion evaluation test were shown in FIG. 5 (Example 1), FIG. 6 (Comparative Example 1), and FIG. 7 (Comparative Example 2), respectively.

**[Table 1]**

| | | Example 1 | Comparative Example 1 | Comparative Example 2 |
|---|---|---|---|---|
| Lubricant base oil Lubricant base oil | | Refined mineral oil | Refined mineral oil | Olefin-based synthetic oil |
| Thickener (addition amount) | | Aliphatic urea (8 wt%) | Aliphatic urea (11 wt%) | Aromatic urea (15 wt%) |
| Organomolybdenum | | 5 wt% | 3 wt% | - |
| Zinc sulfonate | | 2 wt% | 2 wt% | - |
| Calcium sulfonate | | 2 wt% | - | - |
| Calcium phenate | | 1 wt% | - | - |
| Worked penetration (25°C) penetration | | 325 | 300 | 288 |
| Kinematic viscosity of base oil (mm²/s; 40 °C) | | 20.3 | 20.3 | 25 |
| Dropping point | | 185 | 245 | 269 |
| Load Resistance test | Running Distance (Km) | 434 | 117 | 261 |
| | Abrasion (µm) | 0 | 6 | 2 |

As apparent from the results shown in Table 1, the grease composition of Example 1 had an excellent abrasion resistance since the grease composition gave a running distance of 434 km in the abrasion evaluation test and gave abrasion of nearly 0 µm on the rolling surface as shown in FIG. 5.
In contrast, the grease compositions of Comparative Examples 1 and 2 had inferior abrasion resistances to that of the grease composition of Example 1, since the grease compositions of Comparative Examples 1 and 2 gave running distances of 117 km and 261 km, respectively, in the abrasion evaluation test and gave abrasion of 6 µm and 2 µm on rolling surfaces, respectively, as shown in FIGS. 6 and 7.

### Industrial Applicability

The grease composition conforming to vibration of the present invention exerts an excellent abrasion resistance when it is used in guide devices such as a bearing, a sliding part, and a connecting part for various apparatuses, in particular, guide devices such as a linear guide device, a curve guide device, a ball screw, and a ball spline which are used under conditions where vibration is generated when a sliding member is moved relatively to a shaft. The grease composition conforming to vibration of the present invention is used by being enclosed in any of those guide devices, whereby generation of abnormal abrasion can be suppressed as much as possible and slide stability can be maintained for a long period of time, so the grease composition conforming to vibration of the present invention is highly useful in practical use.

## Claims

1. A grease composition conforming to vibration, comprising:
a lubricant base oil of a mineral oil base and/or a synthetic oil base;
a thickener; and
an additive for improving grease performance,
wherein the additive comprises an organomolybdenum, a metal sulfonate, and a metal phenate.

2. A grease composition conforming to vibration according to claim 1, wherein the lubricant base oil has a kinematic viscosity (JIS K2220.23; 40°C) within a range of from 5 to 25 mm²/s.

3. A grease composition conforming to vibration according to claim 1 or 2, wherein the thickener comprises an aliphatic diurea.

4. A grease composition conforming to vibration according to any one of claims 1 to 3, wherein the metal sulfonate comprises one selected from the group consisting of zinc sulfonate, calcium sulfonate, barium sulfonate, and sodium sulfonate, or a mixture of two or more of them.

5. A grease composition conforming to vibration according to any one of claims 1 to 4, wherein the metal phenate comprises one selected from alkali earth metal phenates or a mixture of two or more of them.

6. A grease composition conforming to vibration according to claim 5, wherein the alkali earth metal phenates comprise calcium phenate.

7. A grease composition conforming to vibration according to any one of claims 1 to 6, wherein the lubricant base oil is added with 5 to 20 wt% of the thickener, 2 to 8 wt% of the organomolybdenum, 1 to 7 wt% of the metal sulfonate, and 0.2 to 3 wt% of the metal phenate.

8. A grease composition conforming to vibration according to any one of claims 1 to 7, wherein the grease composition conforming to vibration has a worked penetration (JIS K2220.7; 25°C) of 250 or more.

9. A guide device, comprising the grease composition conforming to vibration according to any one of claims 1 to 8 enclosed therein.
